# EUROPEAN PATENT APPLICATION

(11) **EP 2 544 474 A1**
(43) Date of publication of application: **09.01.2013**
(21) Application number: 11750174.2
(22) Date of filing: 02.03.2011
(51) Int. Cl.: H04W 4/14

(54) **METHOD AND DEVICE FOR PROCESSING SERVICE COMMAND INFORMATION**

(30) Priority: 04.03.2010 CN 201010120059
(71) Applicant: Huawei Device Co., Ltd., Longgang District Shenzhen Guangdong 518129 (CN)
(72) Inventor: TIAN, Xianghui, Shenzhen Guangdong 518129 (CN)
(74) Representative: Goddar, Heinz J.
(86) International application number: PCT/CN2011/071443
(87) International publication number: WO 2011/107021

(57) **Abstract**

A method for processing service command information is provided, which includes the following: When a server determines that an update condition is met, the server searches for service command information corresponding to an operator that currently provides a service for a destination terminal, and sends the service command information to the destination terminal. The terminal sends a request for updating service command information stored in the destination terminal to the server, obtains and stores the service command information sent by the server. A server and a terminal are also provided in embodiments of the present invention. Because service command information corresponding to the operator that currently provides a service for the destination terminal can be sent from the server to the destination terminal, even if the operator updates a service command or a user changes a different serving operator, it can still be ensured that a service can be provided for the user, thereby improving the quality and reliability of service of the operator.

## Description

This application claims priority to Chinese Patent Application No. 201010120059.6, filed with the Chinese Patent Office on March 4, 2010 and entitled "METHOD AND DEVICE FOR PROCESSING SERVICE COMMAND INFORMATION", which is incorporated herein by reference in its entirety.

### FIELD OF THE INVENTION

Embodiments of the present invention relate to the field of communication technologies, and in particular, to a method and device for processing service command information.

### BACKGROUND OF THE INVENTION

By using USSD (Unstructured Supplementary Service Data, unstructured supplementary service data) services, various value-added services can be provided for terminal users more conveniently. In a solution for implementing a USSD service in the prior art, an operator usually pre-configures a USSD command into software or a configuration file, and stores the software or the configuration file in a terminal. When a user needs to use the USSD service of the operator, the terminal reads the corresponding USSD command from the above software or configuration file, and displays the USSD command in a UI (User Interface, user interface), so that the user performs operations to implement the corresponding USSD service.

During the implementation of the present invention, the inventor finds that the prior art at least has the following problems.

When the USSD command of the operator is updated or when the user changes a serving operator, the preset USSD command is invalid, and thus the user cannot use the corresponding USSD service.

### SUMMARY OF THE INVENTION

Embodiments of the present invention provide a method and device for processing a service command, to solve the problem that a user cannot use a corresponding USSD service due to the invalidity of a preset USSD command.

The objectives of the present invention are achieved through the following technical solutions.

A method for processing service command information includes:
when determining that an update condition is met, searching for service command information corresponding to an operator that currently provides a service for a destination terminal; and
sending the service command information to the destination terminal.

A method for processing service command information includes:
sending a request for updating service command information stored in a destination terminal to a server; and
receiving and storing service command information that is returned by the server and is corresponding to an operator that currently provides a service for the destination terminal.

A server includes:
a command searching module, configured to: when it is determined that an update condition is met, search for service command information corresponding to an operator that currently provides a service for a destination terminal; and
a command sending module, configured to send the service command information to the destination terminal.

A terminal includes:
an update requesting module, configured to send a request for updating service command information stored in the terminal to a server; and
a command processing module, configured to receive and store service command information that is returned by the server and is corresponding to an operator that currently provides a service for the terminal.

According to the above technical solutions provided in embodiments of the present invention, service command information corresponding to an operator that currently provides a service for a destination terminal can be sent from a server to the destination terminal; therefore, even if the operator updates the service command or a user changes a different serving operator, it can still be ensured that a service can be provided for the user, thereby improving the quality and reliability of service and of the operator.

### BRIEF DESCRIPTION OF THE DRAWINGS

To illustrate the technical solutions according to the embodiments of the present invention more clearly, the accompanying drawings required for describing the embodiments are introduced below briefly. Apparently, the accompanying drawings in the following description merely show some of the embodiments of the present invention, and persons of ordinary skill in the art can obtain other drawings according to the accompanying drawings without creative efforts.
FIG. 1 is a schematic diagram of a processing procedure according to an embodiment of the present invention;
FIG. 2 is a schematic diagram of a processing procedure according to Embodiment 1 of the present invention;
FIG. 3 is a schematic diagram of a processing procedure according to Embodiment 2 of the present invention;
FIG. 4 is a schematic diagram of a processing procedure according to Embodiment 3 of the present invention;
FIG. 5 is a schematic structural diagram of a device according to an embodiment of the present invention; and
FIG. 6 is a schematic structural diagram of another device according to an embodiment of the present invention.

### DETAILED DESCRIPTION OF THE EMBODIMENTS

The technical solutions of the embodiments of the present invention are hereinafter described clearly and completely with reference to the accompanying drawings in the embodiments of the present invention. Evidently, the described embodiments are only some exemplary embodiments of the present invention, rather than all embodiments of the present invention. All other embodiments obtained by persons of ordinary skill in the art based on the embodiments of the present invention without creative efforts shall fall within the protection scope of the present invention.

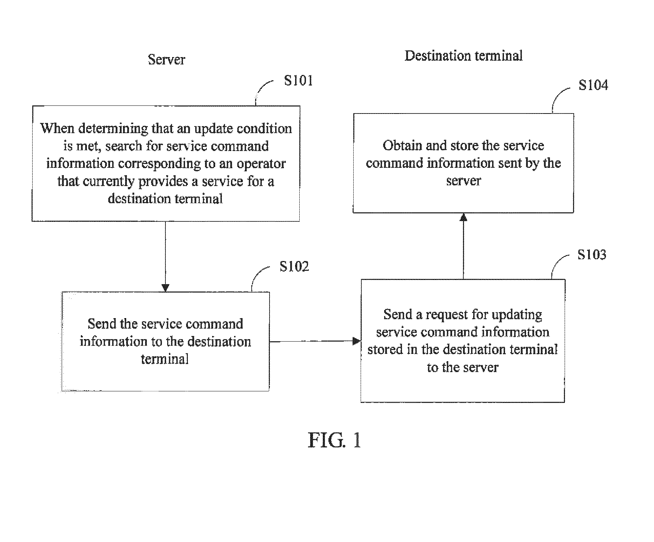

Generally, a service command provided by an operator is stored in software or a configuration file, where the service command includes a USSD service provided by the operator, APN (Access Point Name, access point name) types supported by the operator, operator's LOGO (logo), and operator's homepage that pops up automatically after a terminal accesses the Internet. When the service command of the operator is updated or when a user changes a serving operator, a preset service command is invalid, and thus the user cannot use the corresponding service. To solve this problem, an embodiment of the present invention provides a method for processing service command information. As shown in FIG. 1, the processing procedure includes the following operations:
A server executes the following steps:
   S101. When determining that an update condition is met, search for service command information corresponding to an operator that currently provides a service for a destination terminal.
   S102. Send the service command information to the destination terminal.

The destination terminal executes the following steps:
S103. Send a request for updating service command information stored in the destination terminal to the server.
S104. Obtain and store the service command information sent by the server. The specific implementation includes but is not limited to: storing the received service command information in software or a configuration file used to store the service command information.

The server in this embodiment of the present invention may be a server shared by multiple operators or a server of an operator that currently provides a service for the destination terminal. In this embodiment of the present invention, a message transferred between the server and the destination terminal may specifically adopt the form of a short message or the form of an OTA (Over-the-Air Technology, over-the-air technology) message or in a form of another communication message.

According to the technical solution provided in this embodiment of the present invention, service command information corresponding to the operator that currently provides a service for the destination terminal can be sent from the server to the destination terminal; therefore, even if the operator updates the service command or a user changes a different serving operator, it can still be ensured that a service can be provided for the user, which improves the quality and reliability of service of the operator.

According to different application scenarios, the above embodiment of the present invention may be implemented in any one of the following manners:
(1) When the destination terminal needs to implement a service provided by an operator that currently provides a service for the destination terminal but the service cannot be implemented by using a preset service command corresponding to the service in a local configuration file or local software, the destination terminal sends a request for updating service command information stored in the destination terminal to the server. Specifically, the destination terminal carries operator identity information and service command information, which is to be updated and is corresponding to the service, in a first update request message, and sends the first update request message to the server.

Accordingly, when receiving the first update request message, the server determines that an update condition is met, and according to the operator identity information, finds all service command information corresponding to the operator that currently provides a service for the destination terminal; the server matches the service command information, which is to be updated, with the service command information corresponding to the operator, where the implementation of matching the service command information includes but is not limited to: matching characters or strings; after the matching is finished, the server selects service command information that is corresponding to the operator and is different from the service command information to be updated, and sends the selected service command information to the destination terminal. If the matching result shows that the service command information that is corresponding to the operator and is stored in the server is the same as the service command information to be updated, the server sends a response message to the destination terminal, where the response message is used to inform the destination terminal that updated service command information is not found.
(2) When the destination terminal needs to implement a service provided by an operator that currently provides a service for the destination terminal but does not find a corresponding service command in a local configuration file or local software, or when the service command update function of the destination terminal is triggered (may be triggered by entering an update prompt or clicking an update button by a user), the destination terminal sends a request for updating the service command information stored in the destination terminal to the server. Specifically, the destination terminal carries operator identity information in a second update request message, and sends the second update request message to the server.

Accordingly, when receiving the second update request message, the server determines that the update condition is met; according to the operator identity information, the server finds all service command information corresponding to the operator that currently provides a service for the destination terminal; and the server selects all service command information corresponding to the operator, and sends the selected service command information to the destination terminal.
(3) When the server detects that the service command corresponding to the operator that currently provides a service for the destination terminal is updated, the server searches for updated service command information, selects the updated service command information, and sends the service command information to the destination terminal.

The above operator identity information in this embodiment of the present invention is used to differentiate different operators. In actual applications, the operator identity information may be, but not limited to, an IMSI (International Mobile Subscriber Identity, international mobile subscriber identity) number. In this case, the above destination terminal may be a mobile terminal or a fixed terminal using a SIM card.

The specific implementation of the embodiment of the present invention in practical applications is described in detail below.

### Embodiment 1

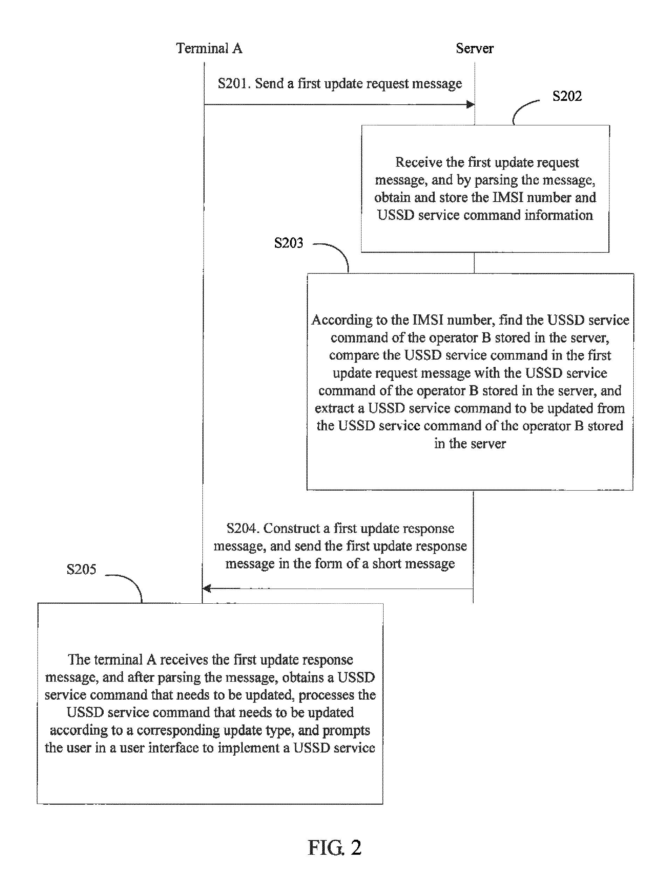

A user initiates, to a terminal A, a request for a USSD service provided by an operator B; the terminal A matches a USSD service command of the operator B in a local configuration file according to identity information of the operator B (for example, identity information of the operator indicates the IMSI number in each exemplary embodiment of the present invention). When the matched USSD service command cannot implement the corresponding USSD service, the following operations are executed according to the method shown in FIG. 2:
S201. The terminal A sends a first update request message to a server, where the first update request message is sent in the form of a short message and adopts the following format:
   <IMSI>[,<(ussdname1 ,ussdtype1)>]..... [ ,< (ussdnamen, ussdtypen) >]

Each field is defined as follows:
The <IMSI> indicates the IMSI number of a current SIM card.

In the <(ussdname1,ussdtype1)> and the <(ussdname n,ussdtype n)>, the ussdname1 or the ussdname n indicates the USSD service command matched by the terminal A in the local configuration file for the current SIM card; the ussdtype1 or the ussdtype n indicates the type of the USSD service command (for example, a query type, an interaction type, and so on).
S202. The server receives the first update request message, and by parsing the message, obtains and stores the IMSI number and USSD service command information.
S203. According to the IMSI number, find the USSD service command of the operator B stored in the server, compare the USSD service command in the first update request message with the USSD service command of the operator B stored in the server, and extract, from the USSD service command of the operator B stored in the server, a USSD service command (that is, a USSD service command that needs to be updated) different from the USSD service command in the first update request message.
S204. The server constructs a first update response message, and sends the message to the destination terminal in the form of a short message. The message adopts the following formal:
   <num>[,<(ussdname1,ussdtype1,state1)>]...... [,< (ussdname n, ussdtype n,state n) >]

Each field is defined as follows:
The <num> indicates the number of USSD service commands that need to be updated. If no USSD service command needs to be updated, the value of the <num> is 0 and the field after the <num> is null.

In the <(ussdne1,ussdtype1,state1)> and the <(ussdname n, ussdtype n,state n)>, the ussdname1 or the ussdname n indicates a USSD service command that needs to be updated; the ussdtype1 or the ussdtype n indicates the type of the USSD service command (for example, the query type, interaction type, and so on); the state1 or the state n indicates the update type of the USSD service command, as an example but not a limitation, the value of the state1 or the state n may be 0, 1, 2, where 0 indicates that an original USSD service command is modified, 1 indicates that a USSD service command is added, and 2 indicates that a USSD service command is deleted.
S205. The terminal A receives the first update response message, and after parsing the message, the terminal A obtains a USSD service command that needs to be updated, processes, according to a corresponding update type, the USSD service command that needs to be updated, and prompts the user in a user interface to implement a USSD service.

In the above S203, the specific implementation of comparing the USSD service commands may be: (1) matching the characters or strings of the USSD service command in the first update message with the characters or strings of the USSD service command of the operator B stored in the server one by one; (2) comparing the service command type of the USSD service command in the first update message with the type of the USSD service command of the operator B, and matching the characters or strings of the USSD service command in the first update message with the characters or strings of the same type of USSD service command of the operator B.

In Embodiment 1 of the present invention, when the terminal cannot implement the corresponding USSD service, the terminal initiates an update to the server according to the operator identity information; the server sends the USSD service command updated by the operator B to terminal, and thus the corresponding USSD service is provided for a terminal user.

### Embodiment 2

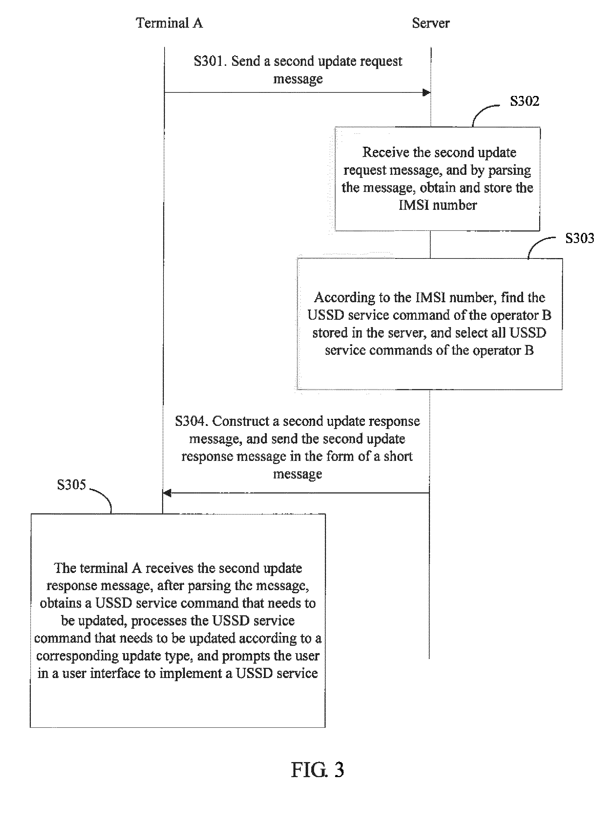

A user initiates, to a terminal A, a request for a USSD service provided by an operator B; the terminal A matches a USSD service command of the operator B in a local configuration file according to an IMSI number. When no USSD service command is matched or when the user triggers a service command update function of the terminal A, the following operations are executed according to the method shown in FIG. 3:
S301. The terminal A sends a second update request message to a server, where the second update request message carries an IMSI number and is sent in the form of a short message.
S302. The server receives the second update request message, and by parsing the message, obtains and stores the IMSI number.
S303. According to the IMSI number, find the USSD service command of the operator B stored in the server, and select all USSD service commands of the operator B (that is, USSD service commands that need to be updated).
S304. The server constructs a second update response message, and sends the message to a destination terminal in the form of a short message. The message adopts the following formal:
   <num>[, <(ussdname1, ussdtype1,state1)>]...... [, < (ussdname n, ussdtype n,state n) >]

Each field is defined as follows:
The <num> indicates the number of USSD service commands that need to be updated; if no USSD service command needs to be updated, the value of the <num> is 0 and the field after the <num> is null.

In the <(ussdname1,ussdtype1,state1)> and the <(ussdname1,ussdtype1,state1)>, the ussdname1 or the ussdname n indicates a USSD service command that needs to be updated; the ussdtype1 or the ussdtype n indicates the type of the USSD service command (for example, a query type, an interaction type, and so on); the state1 or the state 1 indicates the update type of the USSD service command, as an example but not a limitation, the value of the state1 or the state n may be 0, 1, 2, where 0 indicates that an original USSD service command is modified, 1 indicates that a USSD service command is added, and 2 indicates that a USSD service command is deleted.
S305. The terminal A receives the second update response message, and after parsing the message, the terminal A obtains a USSD service command that needs to be updated, processes, according to a corresponding update type, the USSD service command that needs to be updated, and prompts the user in a user interface to implement a USSD service.

In Embodiment 2 of the present invention, when the terminal cannot implement a corresponding USSD service, the terminal initiates an update to the server according to operator identity information; the server sends the USSD service command updated by the operator B to the terminal, and thus the corresponding USSD service is provided for a terminal user.

### Embodiment 3

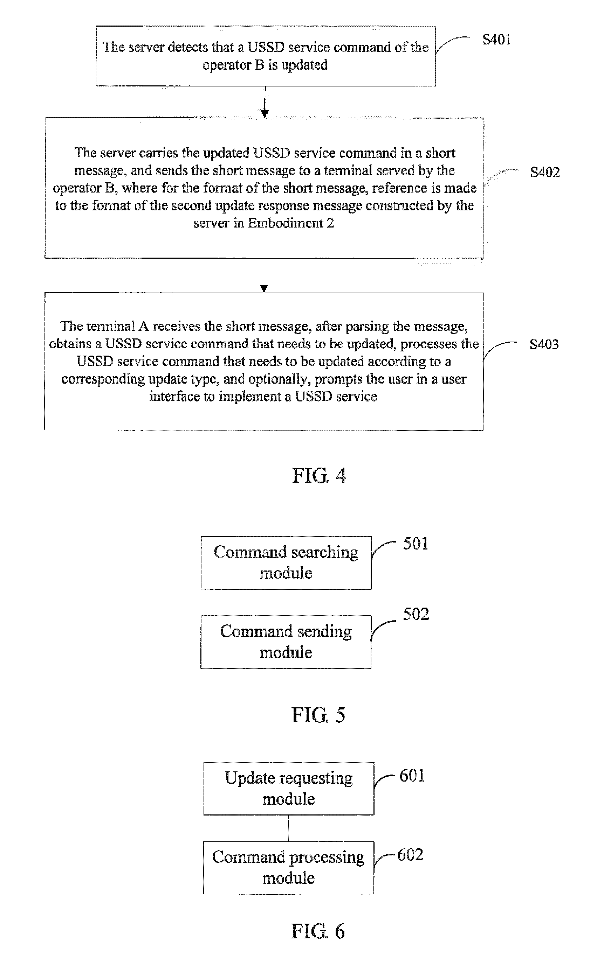

The implementation of Embodiment 3 of the present invention is shown in FIG. 4. The processing procedure includes the following:
S401. A server detects that a USSD service command of an operator B is updated.
S402. The server carries the updated USSD service command in a short message, and sends the short message to a terminal served by the operator B, where for the format of the short message, reference is made to the format of the second update response message constructed by the server in Embodiment 2.
S403. The terminal receives the short message, and after parsing the message, the terminal obtains a USSD service command that needs to be updated, processes, according to a corresponding update type, the USSD service command that needs to be updated, and optionally, prompts a user in a user interface to implement a USSD service.

All or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that can store program codes, such as a ROM, magnetic disk, or CD-ROM.

An embodiment of the present invention provides a server. As shown in FIG. 5, the specific structure of the server includes:
a command searching module 501, configured to: when it is determined that an update condition is met, search for service command information corresponding to an operator that currently provides a service for a destination terminal; and
a command sending module 502, configured to send the service command information to the destination terminal.

The device in this embodiment of the present invention shown in FIG. 5 may be a server shared by multiple operators or a server of the operator that currently provides a service for the destination terminal.

According to different application scenarios, the above command searching module 501 may include an update determining submodule, an operator command searching submodule, a command matching submodule, and a message selecting submodule (not shown in the figure). The update determining submodule is configured to: when a first update request message sent from the destination terminal is received, determine that an update condition is met, and trigger the operator command searching submodule, where the first update request message carries operator identity information and service command information that is to be updated; the operator command searching submodule is configured to find, according to the operator identity information, all service command information corresponding to the operator that currently provides a service for the destination terminal; the command matching submodule is configured to match the service command information, which is to be updated, with the service command information corresponding to the operator. Accordingly, the command selecting submodule is con to: after the command matching submodule finishes the matching, select service command information that is corresponding to the operator and is different from the service command information that is to be updated; and the command sending module 502 is specifically configured to send the selected service command information to the destination terminal. If the matching result shows that the stored service command information corresponding to the operator that currently provides a service for the destination terminal is the same as the service command information that is to be updated, the command sending module 502 sends a response message to the destination terminal, where the response message is used to inform the destination terminal that updated service command information is not found.

Alternatively, the above command searching module 501 may further include an update determining submodule, an operator command searching submodule, and a command selecting submodule (not shown in the figure). The update determining submodule is configured to: when a second update request message sent from the destination terminal is received, determine that an update condition is met, where the second update request message carries operator identity information; the operator command searching submodule is configured to find, according to the operator identity information, all service command information corresponding to the operator that currently provides a service for the destination terminal; the command selecting submodule is configured to select all service command information corresponding to a first operator; and accordingly, the command sending module 502 is specifically configured to send all service command information corresponding to the operator to the destination terminal.

Alternatively, the above command searching module 501 is specifically configured to: when it is detected that a service command corresponding to the operator that currently provides a service for the destination terminal is updated, search for updated service command information; accordingly, the command sending module 502 is specifically configured to send the updated service command information to the destination terminal.

An embodiment of the present invention provides another terminal. As shown in FIG 6, the specific structure of the terminal includes:
an update requesting module 601, configured to send a request for updating service command information stored in the terminal to a server; and
a command processing module 602, configured to receive and store service command information that is returned by the server and is corresponding to an operator that currently provides a service for the terminal.

According to different application scenarios, the update requesting module of the terminal is specifically configured to carry operator identity information and service command information, which is to be updated, in a first update request message, and send the first update request to the server; or is specifically configured to carry operator identity information in a second update request message, and send the second update request message to the server.

The above description is merely exemplary embodiments of the present invention, but the protection scope of the present invention is not limited thereto. Any changes or replacements that can be easily thought of by persons skilled the art within the technical scope disclosed by the present invention should fall within the protection scope of the present invention. Therefore, the protection scope of the present invention is subject to the claims.

## Claims

1. A method for processing service command information, comprising:
when determining that an update condition is met, searching for service command information corresponding to an operator that currently provides a service for a destination terminal; and
sending the service command information to the destination terminal.

2. The method according to claim 1, wherein when first update request information sent from the destination terminal is received, it is determined that the update condition is met, wherein a first update request message carries operator identity information and service command information that is to be updated; and
the searching for service command information corresponding to an operator that currently provides a service for a destination terminal comprises:
finding all service command information corresponding to the operator according to the operator identity information, matching the service command information to be updated with the service command information corresponding to the operator, and selecting service command information that is corresponding to the operator and is different from the service command information to be updated; and
the sending a service command to the destination terminal comprises: sending the selected service command information to the destination terminal.

3. The method according to claim 1, wherein when a second update request message sent from the destination terminal is received, it is determined that the update condition is met, wherein the second update request message carries operator identity information; and
the searching for service command information corresponding to an operator that currently provides a service for a destination terminal comprises: finding all service command information corresponding to the operator according to the operator identity information; and
the sending a service command to the destination terminal comprises: sending all the service command information corresponding to the operator to the destination terminal.

4. The method according to claim 1, wherein when it is detected that a service command corresponding to the operator is updated, it is determined that the update condition is met, and the searching for service command information corresponding to an operator that currently provides a service for a destination terminal comprises: searching for updated service command information; and
the sending a service command to the destination terminal comprises: sending the updated service command information to the destination terminal.

5. A method for processing service command information, comprising:
sending a request for updating service command information stored in a destination terminal to a server; and
receiving and storing service command information that is returned by the server and is corresponding to an operator that currently provides a service for the destination terminal.

6. The method according to claim 5, wherein the sending a request for updating service command information stored in a destination terminal to a server comprises:
carrying operator identity information and service command information that is to be updated in a first update request message, and sending the first update request message to the server.

7. The method according to claim 5, wherein the sending a request for updating service command information stored in a destination terminal to a server comprises:
carrying operator identity information in a second update request message, and sending the second update request message to the server.

8. A server, comprising:
a command searching module, configured to: when it is determined that an update condition is met, search for service command information corresponding to an operator that currently provides a service for a destination terminal; and
a command sending module, configured to send the service command information to the destination terminal.

9. The server according to claim 8, wherein the command searching module mprises an update determining submodule, an operator command searching submodule, a command matching submodule, and a message selecting submodule, wherein:
the update determining submodule is configured to: when a first update request message sent from the destination terminal is received, determine that an update condition is met, and trigger the operator command searching submodule, wherein the first update request message carries operator identity information and service command information that is to be updated;
the operator command searching submodule is configured to find, according to the operator identity information, all service command information corresponding to a first operator;
the command matching submodule is configured to match the service command information to be updated with the service command information corresponding to the operator;
the command selecting submodule is configured to: after the command matching submodule finishes the matching, select service command information that is corresponding to the operator and is different from the service command information to be updated; and
the command sending module is specifically configured to send the selected service command information to the destination terminal.

10. The server according to claim 8, wherein the command searching module comprises an update determining submodule, an operator command searching submodule, and a message selecting submodule, wherein:
the update determining submodule is configured to: when a second update request message sent from the destination terminal is received, determine that an update condition is met, and trigger the operator command searching submodule, wherein the second update request message carries operator identity information;
the operator command searching submodule is configured to find all service command information corresponding to the operator according to the operator identity information;
the command selecting submodule is configured to select all service command information corresponding to the operator; and
the command sending module is specifically configured to send all the service command information corresponding to the operator to the destination terminal.

11. The server according to claim 8, wherein the command searching module is configured to: when it is detected that a service command corresponding to the operator that currently provides a service for the destination terminal is updated, determine that an update condition is met, and search for updated service command information; and the command sending module is specifically configured to send the updated service command information to the destination terminal.

12. A terminal, comprising:
an update requesting module, configured to send a request for updating service command information stored in the terminal to a server; and
a command processing module, configured to receive and store service command information that is returned by the server and is corresponding to an operator that currently provides a service for the terminal.

13. The terminal according to claim 12, wherein the update requesting module is specifically configured to carry operator identity information and service command information that is to be updated in a first update request message and send the first update request to the server.

14. The terminal according to claim 12, wherein the update requesting module is specifically configured to carry operator identity information in a second update request message and send the second the second update request to the server.
